# EUROPÄISCHE PATENTANMELDUNG

(11) **EP 2 521 123 A1**
(43) Veröffentlichungstag der Anmeldung: **07.11.2012**
(21) Anmeldenummer: 12002961.6
(22) Anmeldetag: 27.04.2012
(51) Int. Cl.: G11B 7/243

(54) **Optisches Speichermaterial und Verfahren zur Speicherung**

(30) Priorität: 04.05.2011 DE 102011100382
(71) Anmelder: Forschungszentrum Jülich Gmbh, 52425 Jülich (DE)
(72) Erfinder: Szot, Kristof, 52428 Jülich (DE); Bruchhaus, Rainer, 80639 München (DE); Weng, Robert, 52074 Aachen (DE)

(57) **Zusammenfassung**

Im Rahmen der Erfindung wurde ein Speichermaterial für die Speicherung optisch auslesbarer digitaler Information mit mindestens zwei Zuständen unterschiedlicher Reflektivität entwickelt, zwischen denen es durch Erwärmung umschaltbar ist. Erfindungsgemäß unterscheiden sich die beiden Zustände des Speichermaterials in ihren Oxidationsstufen. Es wurde erkannt, dass der Übergang zwischen verschiedenen Oxidationsstufen eines Materials eine deutlich größere Aktivierungsenergie benötigt als der nach dem Stand der Technik für die Datenspeicherung auf Phasenwechselmedien genutzte Übergang zwischen dem kristallinen und dem amorphen Zustand ein und desselben Materials bei konstanter Stöchiometrie. Dadurch ist die im Material gespeicherte Information deutlich länger langzeitstabil.

Im Rahmen der Erfindung wurde auch ein Verfahren zur Speicherung digitaler Information in einem Speichermaterial entwickelt. Dabei werden die logischen Zustände 0 und 1 in physikalischen Zuständen des Speichermaterials mit unterschiedlichen Reflektivitäten kodiert, und das Speichermaterial wird zum Wechsel zwischen diesen Zuständen erwärmt.

## Beschreibung

Die Erfindung betrifft ein Speichermaterial für die Speicherung optisch auslesbarer digitaler Information sowie ein Verfahren zur Speicherung digitaler Information in einem Speichermaterial.

### Stand der Technik

Optische Phasenwechselmedien beinhalten ein Speichermaterial, das durch den im Laufwerk eingebauten Laser lokal bis über die Schmelztemperatur erwärmt und je nach Geschwindigkeit des anschließenden Abkühlens in den kristallinen oder in den amorphen Zustand überführt werden kann. Beide Zustände haben stark unterschiedliche Reflexionskoeffizienten, so dass sie beim Auslesen der Information mit einem schwächeren Laserstrahl voneinander unterschieden werden können.

Nachteilig sind die solchermaßen gespeicherten Informationen wenig langzeitstabil, so dass sich Phasenwechselmedien nicht für längerfristige Archivierung von Daten eignen. Die Speichermedien verzeihen insbesondere kurzfristige Temperaturerhöhungen schlecht und sind nach wiederholter derartiger Feblbehandlung plötzlich nicht mehr lesbar. Außerdem degeneriert das Speichermaterial mit zunehmender Anzahl Schreibzyklen progressiv, so dass seine Zuverlässigkeit entsprechend abnimmt und seine Lebensdauer bei häufigem Schreiben kurz ist.

### Anfgabe und Lösung

Es ist daher die Aufgabe der Erfindung, ein Speichermaterial und ein Speicherverfahren zur Verfügung zu stellen, mit dem Informationen dauerhaltbarer und auf ein und demselben Medium auch öfter gespeichert werden können als nach dem bisherigen Stand der Technik.

Diese Aufgaben werden erfindungsgemäß gelöst durch ein Speichermaterial gemäß Hauptanspruch und ein Speicherverfahren gemäß Nebenanspruch. Weitere vorteilhafte Ausgestaltungen ergeben sich jeweils aus den darauf rückbezogenen Unteransprüchen.

### Gegenstand der Erfindung

Im Rahmen der Erfindung wurde ein Speichermaterial für die Speicherung optisch auslesbarer digitaler Information mit mindestens zwei Zuständen unterschiedlicher Reflektivität entwickelt, zwischen denen es durch Erwärmung umschaltbar ist_

Erfindungsgemäß unterscheiden sich die beiden Zustände des Speichermaterials in ihren Oxidationsstufen.

Es wurde erkannt, dass der Übergang zwischen verschiedenen Oxidationsstufen eines Materials eine deutlich größere Aktivierungsenergie benötigt als der nach dem Stand der Technik für die Datenspeicherung auf Phasenwechselmedien genutzte Übergang zwischen dem kristallinen und dem amorphen Zustand ein und desselben Materials bei konstanter Stöchiometrie. Dadurch ist die im Material gespeicherte Information deutlich länger langzeitstabil.

Da die thermische Energie bei Raumtemperatur deutlich geringer ist als die Aktivierungsenergie, die dem Speichermaterial für eine Änderung des Oxidationszustandes zugeführt werden muss, ist es nicht spontan bestrebt, den einen Zustand zu verlassen und in den anderen zu wechseln. Das Speichermaterial eines Phasenwechselmediums nach dem Stand der Technik dagegen ist von Natur aus kristallin und wird in den amorphen Zustand überfährt, indem es lokal aufgeschmolzen wird und durch schnelles Abkühlen erstarrt, bevor es sich rekristallisieren kann. In diesem Zustand behält das Material dauerhaft seine Tendenz zur Rekristallisation bei, so wie eine zusammengedrückte Feder ihre Tendenz beibehält, sich wieder auszudehnen, sobald sich hierzu die Gelegenheit bietet. Bereits bei Raumtemperatur ist die Rekristallisation energetisch nicht absolut verboten, sondern nur wenig wahrscheinlich, so dass das Material auf einer langen Zeitskala Stück für Stück rekristallisiert und die eingeschriebene Information verwittert. Jede Temperaturerhöhung beschleunigt diesen Prozess dramatisch und führt wie ein Summationsgift zu einer irreversiblen Schwächung des Kontrasts beim Auslesen der gespeicherten Information, bis schließlich die beiden logischen Zustände 0 und 1 nicht mehr voneinander unterscheidbar sind und die Information verloren ist.

In einer besonders vorteilhaften Ausgestaltung der Erfindung ist das Speichermaterial in beiden Zuständen kristallin. Dann sind beide Zustände gleichermaßen durch eine kristalline Bindungsenergie stabilisiert. Das Material befindet sich energetisch jeweils in einer Potentialmulde, so dass eine besonders hohe Aktivierungsenergie erforderlich ist, damit es den Zustand wieder verlassen kann. Wegen der kristallinen Fernordnung gilt dies für jede Formeleinheit des Materials gleichermaßen, so dass das Material nicht an bestimmten Orten mit abgesenkter Aktivierungsenergie mit dem Verlassen seines Zustands beginnen und schleichend immer weiter degenerieren kann.

Zudem können kleinere Defekte, beispielsweise durch mechanische Beschädigungen, bei geeigneter Temperatur von selbst ausheilen, weil die kristalline Fernordnung die für eine solche Selbstreparatur notwendige Information bereitstellt und das Speichermaterial zudem bei gegebener Temperatur und gegebenem Sauerstoffpartialdruck in der Umgebung genau einen stabilen Zustand anstrebt.

Als erfindungsgemäßes Speichermaterial ist prinzipiell insbesondere jedes Oxid geeignet, dessen Wertigkeit durch Temperaturerhöhung unterhalb seines Schmelzpunkts veränderlich ist. Die Richtung, in der die Wertigkeit sich ändert, kann dann insbesondere durch den Sauerstoffpartialdruck eingestellt werden. In einer Umgebung mit erhöhtem Sauerstoffpartialdruck wird das Material weiter oxidiert, in einer Umgebung mit vermindertem Sauerstoffpartialdruck dagegen reduziert Dieser Vorgang kann sehr oft wiederholt werden. Das Material kann jeweils nur einen der vordefinierten Zustände annehmen und hat ansonsten keine weiteren Freiheitsgrade, um sich die Vorgeschichte der bisherigen Schreibvorgänge zu merken.

Wegen der negativen Bildungsenthalpie der meisten Übergangsmetalloxide gilt der Trend, dass bei hohen Temperaturen die Stabilität des Oxids mit niedrigerer Wertigkeit des Übergangsmetalls zunimmt. Vorteilhaft enthält das Speichermaterial daher ein Übergangsmetall oder ein Übergangsmetalloxid.

In einer besonders vorteilhaften Ausgestaltung der Erfindung enthält das Material Nickel oder ein Nickeloxid. Speziell Nickeloxid geht schon bei Temperaturen zwischen 300 °C und 500 °C in einen gut leitenden metallischen Zustand über, wenn ein gegenüber normaler Atmosphäre verminderter Sauerstoffpartialdruck vorgelegt wird. Wird das Material abgefühlt und unter normalem atmosphärischem Sauerstoffpartialdruck erneut in den genannten Temperaturbereich aufgeheizt, oxidiert es reversibel zurück.

In einer besonders vorteilhaften Ausgestaltung der Erfindung ist das Speichermaterial im einen Zustand ein Metall und im anderen Zustand ein Isolator. In diesen beiden Zuständen unterscheiden sich die Reflektivitäten des Speichermaterials besonders stark voneinander. Der diesbezügliche Kontrast ist bedeutend höher als zwischen dem kristallinen und dem amorphen Zustand bei Phasenwechselmedien nach dem Stand der Technik. Speziell Oxide von Übergangsmetallen in höheren Oxidationsstufen wandeln sich beim Erhitzen in Oxide niedrigerer Oxidationsstufen um. Haben diese Oxide niedrigerer Oxidationsstufen metallische Eigenschaften und sind die zugehörigen Oxide höherer Oxidationsstufen isolierend, lässt sich dieser Phasenübergang nutzen, um besonders hohen Kontrast beim Auslesen der Information zu erzielen. Neben Nickeloxid NiO gehört beispielsweise TiO₂ zu dieser Materialklasse. TiO₂ ist das Oxid des vierwertigen Titans, das ein Isolator ist. Das zweiwertige Oxid TiO hat dagegen metallische Leitfähigkeit.

Im Rahmen der Erfindung wurde auch ein Verfahren zur Speicherung digitaler Information in einem Speichermaterial entwickelt. Dabei werden die logischen Zustände 0 und 1 in physikalischen Zuständen des Speichermaterials mit unterschiedlichen Reflektivitäten kodiert, und das Speichermaterial wird zum Wechsel zwischen diesen Zuständen erwärmt.

Erfindungsgemäß werden die logischen Zustände 0 und 1 in unterschiedlichen Oxidationsstufen des Speichermaterials kodiert_

In Verallgemeinerung der in Bezug auf das Speichermaterial gewonnenen Erkenntnis haben die Erfinder zum Einen erkannt, dass sich unterschiedliche Oxidationsstufen eines Materials sehr drastisch in ihren Reflektivitäten unterscheiden können, insbesondere wenn das Material in der einen Oxidationsstufe isolierend ist und in der anderen Oxidationsstufe metallische Eigenschaften aufweist. Zum Anderen können verschiedene Oxidationsstufen jeweils kristallin sein, so dass sie von Natur aus stabil sind.

Ein wesentlicher Unterschied gegenüber der Datenspeicherung auf Phasenwechselmedien nach dem Stand der Technik besteht darin, dass das Speichermaterial beim Speichern von Information zwecks Änderung der Oxidationsstufe Sauerstoff mit der Umgebung austauscht. Hierzu ist es notwendig, dass das Speichermedium im direkten Kontakt mit einer Umgebungsaboaosphäre ist Auf optischen Speichermedien nach dem Stand der Technik (CD, DVD, Phasenwechselmedium) ist das eigentliche Speichermaterial hingegen in eine Sandwichstruktur zwischen Schutzschichten und dem Kunststoff des Datenträgers eingebracht, und es wird durch den Kunststoff hindurch ausgelesen.

Soweit die vorherigen Ausführungen zum Speichermaterial Erkenntnisse und Maßnahmen enthalten, die auch auf das Verfahren anwendbar sind, gelten diese ausdrücklich auch als für das Verfahren offenbart Vorteilhaft wird ein erfindungsgemäßes Speichermaterial bei der Durchführung des Verfahrens als Speichermaterial gewählt.

In einer besonders vorteilhaften Ausgestaltung der Erfindung wird das Speichermaterial beim Wechsel zwischen den beiden Oxidationsstufen durchgehend kristallin gehalten. Dann befindet es sich immer im Zustand der Fernordnung und wird lediglich von der einen Fernordnung in die andere umgeschaltet. Dadurch bleibt neben der eigentlichen gespeicherten Information im Speichermaterial keine Vorgeschichte der bisherigen Schreibvorgänge zurück Das Speichermaterial kann dann sehr oft zwischen den beiden Oxidationsstufen umgeschaltet werden. Hierin liegt ein wesentlicher Unterschied zur Datenspeicherung auf Phasenwechselmedien nach dem Stand der Technik, bei der das Speichermaterial zum Umschalten zwischen dem kristallinen und dem amorphen Zustand lokal aufgeschmolzen wird. Diese Umwandlung ist weit weniger reversibel als der erfindungsgemäß genutzte Wechsel zwischen Oxidationsstufen. Vorteilhaft wird daher das Medium beim Wechsel zwischen den Oxidationsstufen unterhalb seiner Schmelztemperatur gehalten.

Um eine Vielzahl von Informationen auf einem Speichermedium aus dem Speirhermaterial zu speichern, kann das Speichermedium lokal erwärmt werden, beispielsweise mit einem Laser. Die Erwärmungszone kann eine Ausdehnung von einigen 100 bis 1000 nm haben. Zum Initialisieren kann das Speichermedium hingegen zur Gänze erwärmt werden.

In einer besonders vorteilhaften Ausgestaltung der Erfindung wird über den am erwärmten Ort auf dem Medium vorgelegten Sauerstoffpartialdruck eingestellt, in welcher Richtung die Oxidationsstufe des Mediums am erwärmten Ort geändert wird. Typischerweise wirkt ein Sauerstoffpartialdruck von 10⁻⁴ mbar oder weniger reduzierend. Vorteilhaft ist dabei der Wechsel in eine Richtung unter normalem atmosphärischem Sauerstoffpartialdruck möglich; so dass etwa ein zur Gänze auf eine Oxidationsstufe initialisiertes Speichermedium einmal komplett unter normaler Atmosphäre beschrieben werden kann und nur zum anschließenden Löschen erneut einem hiervon abweichenden Sauerstoffpartialdruck ausgesetzt werden muss.

Vorteilhaft wird das Medium zum Wechsel zwischen den Oxidationsstufen auf eine Temperatur zwischen 200°C und 800 °C, bevorzugt zwischen 300 °C und 500°C, erwärmt Diese Temperaturen lassen sich durch Erwärmung mit einem kompakten Laser mit einer für Datenspeicherung relevanten Geschwindigkeit erzeugen.

Die mit dem erfindungsgemäßen Verfahren gespeicherten Daten können auf herkömmliche Weise optisch ausgelesen werden. Vorteilhaft ist das Speichermedium so konzipiert, dass es in Bezug auf das Auslesen den Spezifikationen herkömmlicher Speichermedien (etwa CD, DVD, Phasenwechselmedium, Blu-Ray) entspricht und mit existierenden Laufwerken gelesen werden kann. Nur für das Schreiben von Information ist dann ein zusätzliches Gerät erforderlich.

### Spezieller Beschreibungsteil

Nachfolgend wird der Gegenstand der Erfindung anhand von Figuren näher erläutert, ohne dass der Gegenstand der Erfindung dadurch beschränkt wird.

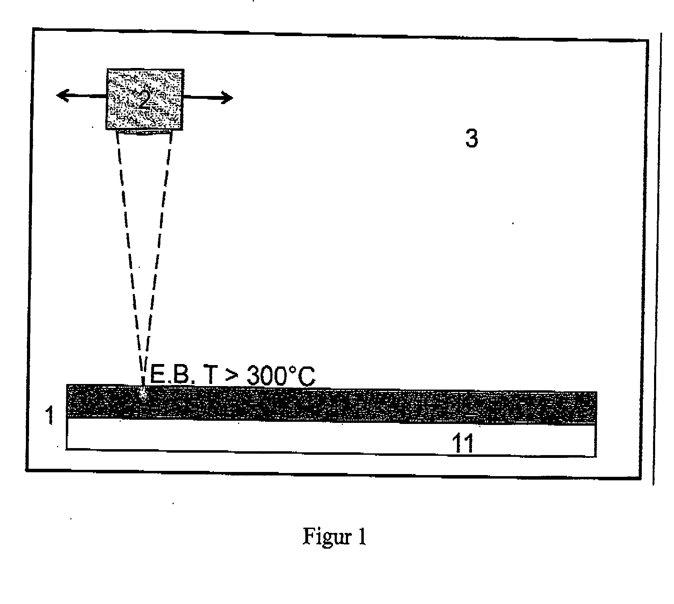

Figur 1 zeigt den prinzipiellen Aufbau einer Vorrichtung, mit der das erfindungsgemäße Verfahren durchgeführt werden kann, mit eingelegtem Speichermedium 1 in Schnittzeichnung. Das Speichermedium 1 besteht aus einer 2-3 mm dicken Glasplatte 11 als Trägersubstrat, auf dem eine 30-100 nm dicke Schicht 12 aus Nickeloxid als Speichermaterial aufgebracht ist. Die Glasplatte 11 kann auch durch ein Trägersubstrat aus Kunststoff ersetzt werden, wenn dieses in geeigneter Weise thermisch vom Speichermaterial 12 entkoppelt wird. Das Speichentiedium 1 ist eine rotierbare Disc, deren Oberfläche senkrecht zur Papierebene steht und deren Rotationsachse in der Papierebene liegt

Das Speichermaterial 12 kann von einem fokussierten Laser 2 lokal erwärmt werden. Der Laser 2 ist in einer Achse beweglich gelagert. Da zugleich das Speichermedium 1 rotiert, kann der Laserstrahl jeden Punkt auf der Oberfläche des Speichermaterials 12 erreichen.

Das Speichermedium 1 und der Laser 2 befinden sich in einem Rezipienten 3, in dem der Sauerstoffpartialdruck veränderlich ist Dadurch kann eingestellt werden, in welcher Richtung die Oxidationsstufe des Speichermaterials 12 bei Erwärmung verändert wird. Bei normalem atmosphärischem Sauerstoffpartialdruck und einer Temperatur zwischen 300 °C und 500°C in der vom Laserstrahl erwärmten Zone E.B. wird metallisches Nickeloxid zu isolierende Nickeloxid weiter oxidiert. Bei vermindertem Sauerstoffpartialdruck wird isolierendes Nickeloxid zu metallischem Nickeloxid reduziert.

Wird das Medium 1 bei vermindertem Sauerstoffpartialdruck zur Gänze erwärmt, wird das Speichermaterial 12 vollständig in den metallischen Zustand reduziert. Es kann dann bei normalem atmosphärischem Sauerstoffpartialdruck lokal in den isolierenden Zustand umgeschaltet werden. Wird das Medium 1 dagegen bei normalem atmosphärischem Sauerstoffpartialdruck zur Gänze erwärmt, wird das Speichermaterial 12 vollständig zu isolierendem Nickeloxid oxidiert Bei vermindertem Sauerstoffpartialdruck kann es dann lokal in den metallischen Zustand reduziert werden.

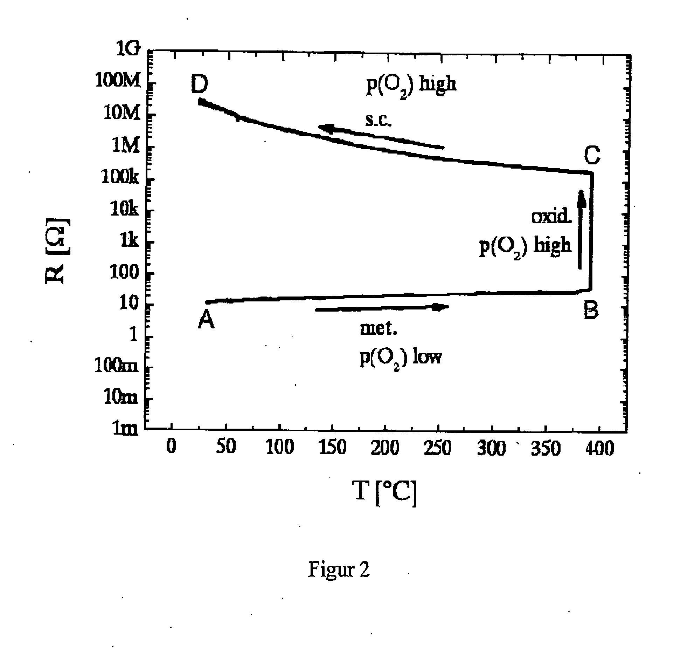

Figur 2 zeigt die Abhängigkeit des elektrischen Widerstands R, der zwischen zwei 3-4 mm voneinander entfernten Kontakten an einer 1-2 mm breiten länglichen Probe durch Anlegen einer Spannung von 10 mV über den daraufhin durch die Nickeloxid-Schicht getriebenen Strom gemessen wurde, von der Temperatur T in logarithmischer Auftragung. Die Probe ist eine 50 nm dicke Nickeloxid-Schicht auf einem Si-Wafer. Damit die Widerstandsmessung nicht von den halbleitende Eigenschaften des Si beeinflusst wird, befindet sich zwischen der Nickeloxid-Schicht und der Waferoberfläche eine 400 nm dicke isolierende SiO₂-Schicht.

Das im Folgenden beschriebene Verhalten der 50 nm dicken Nickeloxid-Schicht zeigt sich auch für Proben mit dünneren Nickeloxid-Schichten ab etwa 20 nm Schichtdicke sowie für Proben mit dickeren Nickeloxid-Schichten bis etwa 100 nm Schichtdicke. Jenseits von etwa 100 nm Schichtdicke ändert sich die Morphologie der Schicht, was sich auf den diffusiven und elektrischen Transport von Sauerstoff in der Schicht auswirkt. Dadurch wird die Oxidationsdynamik schwerer beherrschbar.

Ausgehend vom metallischen Zustand ("met."), in dem bei einem geringen Sauerstoffpartialdruck ("p(O₂) low") von 10⁻⁶ mbar und Raurnternperatur (Punkt A) ein reduzierter Zustand mit der Stöchiornetrie Ni₁O₁₋ₓ vorlag, wurde zunächst die Temperatur erhöht. Der Widerstand steigt linear mit der Temperatur, wie man dies von der metallischen Phase des Nickeloxids erwartet.

Bei einer Temperatur von etwa 380 °C (Punkt B) wurde der Sauerstoffpartialdruck auf 133 mbar erhöht ("p(O₂) high") und das Nickeloxid weiter oxidiert. Innerhalb von etwa drei Stunden steigt der Widerstand bei konstanter Temperatur um mehrere Größenordnungen an bis zum Punkt C ("oxid"). Dass dies vergleichsweise lange dauerte, führen die Erfinder auf das für die Widerstandsmessung über die Probe angelegte elektrische Feld zurück, das die Positionen der Sauerstoff-Leerstellen in der Nickeloxid-Schicht beeinflusst. Bei potentialfreier Schicht zeigen XPS-Messungen, dass der Sauerstoffgehalt der Schicht in einigen zehn Minuten um etwa 30 % geändert werden kann.

Bei festgehaltenem Sauerstoffpartialdruck wurde nun die Temperatur wieder bis auf Raumtemperatur (Punkt D) vermindert. Mit abnehmender Temperatur steigt der Widerstand gemäß der Formel R=R₀*exp(-E₈/k_{B}*T) an, worin R₀ eine Konstante, Eₐ die Aktivierungsenergie (Bandlücke) und k_{B} die Boltzmann-Konstante ist. Dieses Verhalten ist typisch für die halbleitende Phase ("s.c.") von Nickeloxid. Wird der Logarithmus des Widerstands gegen den Kehrwert der Temperatur aufgetragen (Arrhenius-Plot), lässt sich aus der Steigung des Widerstands die Bandlücke Eₐ bestimmen.

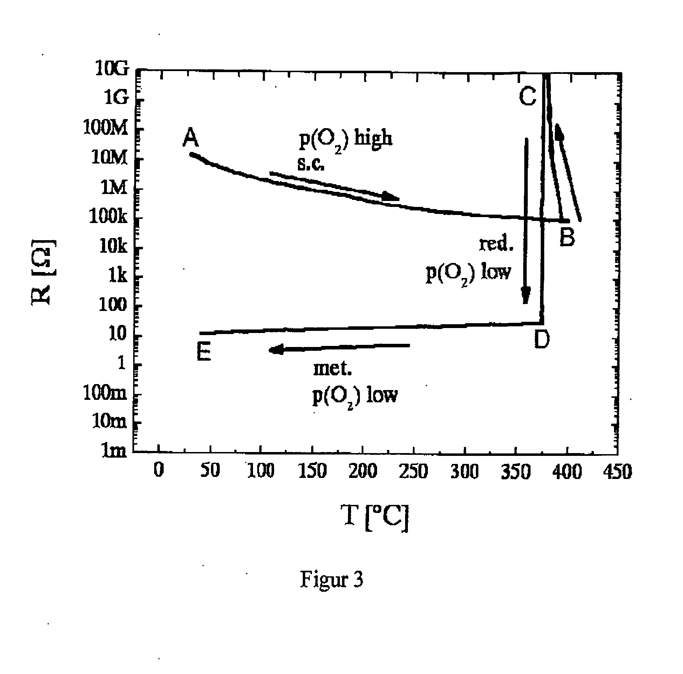

Figur 3 zeigt weitere Widerstandmessungen an der gleichen Probe bei umgekehrtem Verlauf von Temperatur und Sauerstoffpartialdruck in logarithmischer Auftragung. Ausgehend vom halbleitenden Zustand ("s.c.") bei hohem Sauerstoffpartialdruck ("p(O₂) high") von 133 mbar (Punkt A) wurde zunächst die Temperatur erhöht. Mit steigender Temperatur nimmt der Widerstand ab, wie dies für die halbleitende Phase üblich ist.

Bei etwa 390 °C (Punkt B) wurde der Sauerstoffpartialdruck auf 7* 10⁻⁸ mbar vermindert ("p(O₂) low") und gleichzeitig die Temperatur leicht auf etwa 375 °C vermindert. Der Widerstand steigt deutlich an bis zum Punkt C. Die Erfinder fübren dies darauf zurück, dass beim Oxidieren des Nickels in den halbleitenden Zustand ein überstöchiometrisches Oxid Ni₁O₁₊ₓ gebildet wurde. Indem dieses Oxid reduzierenden Bedingungen ausgesetzt wird, wird es zunächst zur optimalen Stöchiometrie Ni₁O₁ reduziert. Es wurden nun Temperatur und Sauerstoffpartialdruck festgehalten und das Nickeloxid in die Stöchiometrie Ni₁O₁₋ₓ reduziert (Punkt D)- Dementsprechend nimmt der Widerstand um viele Größenordnungen ab.

Bei weiterhin festgehaltenem Sauerstoffpartialdruck wurde die Temperatur nun bis auf Raumtemperatur vermindert (Punkt E). Dabei zeigt sich wieder die für die metallische Phase des Nickeloxids charakteristische lineare Abhängigkeit des Widerstands von der Temperatur.

Der Zustand optimaler Stöchiometrie bei Punkt C kann zur Speicherung zusätzliche Information genutzt werden, indem bei seinem Erreichen die Temperatur schnell vermindert wird, bevor das Nickeloxid sich weiter reduziert.

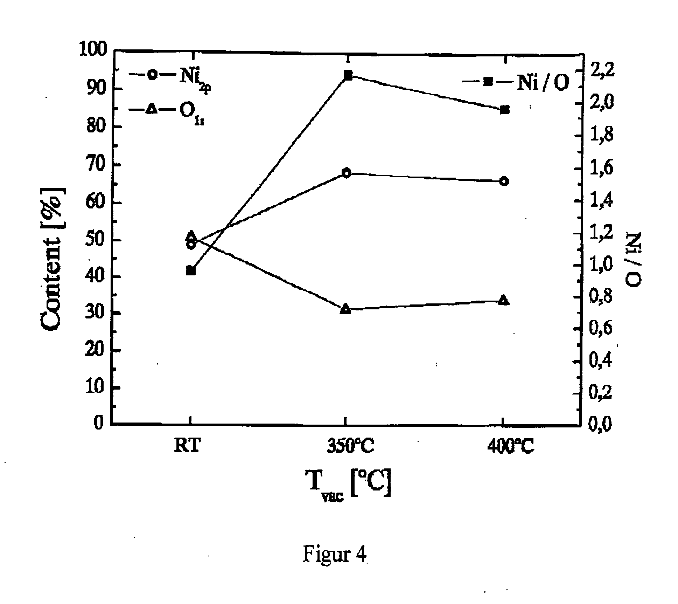

Figur 4 zeigt in-situ XPS-Messungen an einer Nickeloxid-Probe im Vakuum in Abhängigkeit der Temperatur, ausgehend von Raumtemperatur (RT) und Stöchiometrie Ni₁O₁. Aufgetragen ist der gemessene Gehalt der Probe ("Content") an Nickel und Sauerstoff (linke Skala) sowie das Verhältnis von Nickel zu Sauerstoff (rechte Skala). Die Temperaturskala ist nicht maßstabsgetreu.

Im Temperaturfenster zwischen 350 und 400 °C wird der Gehalt an Sauerstoff besonders stark vermindert zugunsten von Nickel. Somit eignet sich dieses Temperaturfenster besonders gut zur Reduktion von Nickeloxid in dem Sinne, dass ein maximaler optischer Kontrast zwischen reduzierten und nicht reduzierten Stellen auf dem Medium erzielt wild. Bei noch höheren Temperaturen bewirkt der beständig aus dem Bulk der Schicht zur Oberfläche nachdiffundierende Sauerstoff, dass sich an der Probe noch weitere kristalline Strukturen bilden.

Ergänzend hierzu wurde SIMS (Secondary Ion Mass Spectroscopy) an der Probe durchgeführt. Dabei wird ein immer tieferer Krater in die Probe gesputtert, und das abgetragene Material wird in einem Massenspektrometer analysiert Auf diese Weise lässt sich die Stöchiometrie abhängig von der Tiefe im Material analysieren. Bei diesen Versuchen zeigte sich, dass der Sauerstoff an der Oberfläche der Schicht am effektivsten entfernt wurde. Die Reduktion wurde mit zunehmender Eindringtiefe in die Schicht schwächer, war aber immer noch merklich. Dies steht im Einklang damit, dass der Austausch des Sauerstoffs mit der Umgebungsatmosphäre nur über die Oberfläche der Schicht stattfindet und Sauerstoff aus dem Bulk erst zur Oberfläche diffundieren muss, um mit der Umgebung ausgetauscht zu werden. Zugleich liefern diese Versuche eine Aussage über die Robustheit des Speichermaterials gegenüber mechanischer Beschädigung. Selbst wenn ein Teil der Schicht durch Verkratzen abgetragen wird, ist die Information, wenn auch mit geringerem Kontrast, auch in der Tiefe des Materials noch gespeichert und kann weiterhin ausgelesen oder zumindest mit leicht erhöhtem Aufwand wiederhergestellt werden.

## Patentansprüche

1. Speichermaterial für die Speicherung optisch auslesbarer digitaler Information mit mindestens zwei Zuständen unterschiedlicher Reilektivität, zwischen denen es durch Erwärmung umschaltbar ist,
**dadurch gekennzeichnet, dass**
sich die beiden Zustände des Speichermaterials in ihren Oxidationsstufen unterscheiden.

2. Speichermaterial nach Anspruch 1, **dadurch gekennzeichnet, dass** es in beiden Zuständen kristallin ist.

3. Speichermaterial nach einem der Ansprüche 1 bis 2, **dadurch gekennzeichnet, dass** es ein Oxid enthält, dessen Wertigkeit durch Temperaturerhöhung unterhalb seines Schmelzpunkts veränderlich ist.

4. Speichermaterial einem der Ansprüche 1 bis 3, **dadurch gekennzeichnet, dass** es ein Übergangsmetall oder ein Übergangsmetalloxid enthält.

5. Speichermaterial nach einem der Ansprüche 1 bis 4, **dadurch gekennzeichnet, dass** es Nickel oder ein Nickeloxid enthält.

6. Speichermaterial nach einem der Ansprüche 1 bis 5, **dadurch gekennzeichnet, dass** es in dem einen Zustand ein Metall und in dem anderen Zustand ein Isolator ist.

7. Verfahren zur Speicherung digitaler Information in einem Speichermaterial, wobei die logischen Zustände 0 und 1 in physikalischen Zuständen des Speichermaterials mit unterschiedlichen Reflektivitäten kodiert werden und das Speichermaterial zum Wechsel zwischen diesen Zuständen erwärmt wird,
**dadurch gekennzeichnet, dass**
die logischen Zustände 0 und 1 in unterschiedlichen Oxidationsstufen des Speichermaterials kodiert werden.

8. Verfahren nach Anspruch 7, **dadurch gekennzeichnet: dass** ein Speichermaterial nach einem der auf ein Speichermaterial gerichteten Ansprüche als Speichermaterial gewählt wird.

9. Verfahren nach einem der Ansprüche 7 bis 8, **dadurch gekennzeichnet, dass** das Speichermaterial während des Wechsels zwischen den beiden Oxidationsstufen durchgehend kristallin gehalten wird.

10. Verfahren nach einem der Ansprüche 7 bis 9, **dadurch gekennzeichnet, dass** das Medium beim Wechsel zwischen den Oxidationsstufen unterhalb seiner Schmelztemperatur gehalten wird.

11. Verfahren nach einem der Ansprüche 7 bis 10, **dadurch gekennzeichnet, dass** über den am erwärmten Ort auf dem Medium vorgelegten Sauerstoffpartialdruck eingestellt wird, in welcher Richtung die Oxidationsstufe des Mediums am erwärmten Ort geändert wird.

12. Verfahren nach einem der Ansprüche 7 bis 11, **dadurch gekennzeichnet, dass** das Medium zum Wechsel zwischen den Oxidationsstufen auf eine Temperatur zwischen 200°C und 800 °C, bevorzugt zwischen 300 °C und 500 °C, erwärmt wird.
